# EUROPEAN PATENT APPLICATION

(11) **EP 0 893 874 A1**
(43) Date of publication of application: **27.01.1999**
(21) Application number: 96941845.8
(22) Date of filing: 11.12.1996
(51) Int. Cl.: H02K 21/14

(54) **HOMOPOLAR INDUCTION GENERATOR**

(71) Applicant: Miyata, Satoru, Nagoya-shi, Aichi 463 (JP)
(72) Inventor: Miyata, Satoru, Nagoya-shi, Aichi 463 (JP)
(74) Representative: Gemmell, Peter Alan, Dr.
(86) International application number: JP9603627
(87) International publication number: WO9826494

(57) **Abstract**

A homopolar induction generator comprising a rotating magnetic pole and a plurality of armatures. Each armature includes an armature core and a conductor and has a magnetized section and a coil section which is the conductor wound around part of the armature core. The rotating magnetic pole includes a rotating shaft and magnets and has a magnetic pole section in which two or more magnets are arranged around the part of the rotating shaft. The magnets arranged in the magnetic pole section are arranged so that the S or N poles of the magnets can be positioned on the opposite side of the rotating shaft. Or, the rotating magnetic pole has a plurality of magnetic pole sections and the magnets arranged in the magnetic pole sections are arranged so that the S poles of the magnets can be positioned on one end side of the rotating shaft and the N poles of the magnets can be positioned on the other end side. The axial line of the armature coil section and the rotating shaft of the rotating magnetic pole are arranged around the rotary magnetic pole in the same direction and the magnetized section of the armature repeatedly becomes close to and far from the magnetic pole section when the magnetic pole rotates. Therefore, electric power can be obtained very efficiently from the rotation of the magnetic pole. Even when the size of the generator is reduced, in addition, the generator can stably supply an alternating current without waveform disturbance and a desired waveform can be formed arbitrarily.

## Description

### Technical Field

This invention relates to an efficient homopolar induction generator which can stably supply an alternating current without waveform disturbance even when the size of the generator is reduced.

### Background of Art

In a modern society, as electric power is used in many situations of our life, a demand of generators, in particular to a small generator, has increased by year and year.

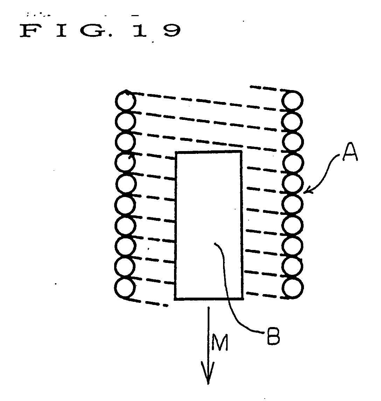

In general, generating is by converting a rotation of coils or magnetic materials into electric power, but most of current popular generators consist of armature coils A and a magnetic material B as shown in figure 17 and an alternating current is generated in the said armature coils A by rotating the armature coils A or the said magnetic material B. As the case may be, electric power is obtained in a method based on a principle such as rectifying the alternating. M in a drawing shows a method of a rotation of the magnetic material B.

However, in this method, electric current running through the armature coil A produces magnetic and the magnetic disturbs a magnetic flux of the magnetic material B, which results in that electric power is not stably obtained and its efficiency gets worse as spaces E between the armature coils A become large. Moreover, a section of non-magnetic flux arranged between the S pole and N pole of the magnetic materials B becomes large, the efficiency gets worse. As this evil influence becomes remarkable as the size of a generator becomes small, therefore, this method is not suitable for a small generator.

There is a method called "single pole" to convert a rotation of magnetic poles into electric power. This is the method to generate a direct current in a manner that rotating magnetic poles across in the same direction over a lead wire. A method shown in figure 18 is illustrated as such a method.

A generator J shown in figure 18 obtains a direct current by a manner that D and D' ways of sliding contact electrically touches a rotator A acrossing a line of magnetic force G produced from coil C and rotating in M direction.

However, in this method, magnetic produced by an electric current running through the rotator A disturbs the line of magnetic force G produced from coil C, therefore, a problem ; electric power can not be stably obtained is not able to be solved by this method.

There is an other method. This method, as shown in figure 19, is a method that electric power is produced through a coil A by magnetic produced in the inside of the armature coil A or demagnetizing the inside of the said coil A. In the method shown in figure 19, a magnetic material B is transferred toward M direction so that electric power is produced by demagnetizing the inside of the armature coil A from it.

However, in this method, electric power can be efficiently obtained by only either way, producing magnetic or demagnetizing, and a plurality of magnetic poles are required to continuously obtain an electric power, which make the size of a generator becomes large.

### Disclosure of Invention

The present invention of claim 1 is a homopolar induction generator comprising rotating magnetic poles and a plurality of armatures consisting of an armature core and conductors and including a magnetized section and a coil section which is the conductor wound around a part of the said armature core. The rotating magnetic pole comprises a rotating magnetic pole, a rotating shaft, and magnets, and has a magnetic pole section in which more than two said magnets are arranged around the part of the said rotating shaft. The magnets arranged in the part of the magnetic poles are arranged on the rotating shaft so that the S or N poles of the magnets is arranged on the opposite side of the rotating shaft. The said armature is arranged so that the axial line of the armature coil section and the rotating shaft of the rotating magnetic pole are arranged in the same direction around the said rotating magnetic pole. The magnetized section of the armature repeatedly becomes close to and far from the rotating magnetic pole section when the rotating magnetic pole rotates. The present invention of claim 2 is a homopolar induction generator comprising the rotating shaft and a plurality of armatures consisting of armature cores and conductors and including a magnetized section and a coil section which is the conductor wound around a part of the said armature core. The rotating magnetic pole consists of the rotating shaft and magnets and has a magnetic pole section in which more than two said magnets are arranged around a part of the said rotating shaft. The magnets positioned on the magnetic poles are arranged so that one end of the rotating shaft is S pole and the other end is N pole. The said armatures are arranged so that the axial line of the armature coil section and the rotating shaft of the rotating magnetic poles are arranged in the same direction around the said rotating magnetic pole. The magnetized section of the armature repeatedly becomes close to and far form the magnetic pole section when the rotating magnetic pole rotates. Therefore, electric power can be efficiently obtained from the rotation of the magnet poles and an alternating current can be stably supplied without waveform disturbance even when the size of a generator is reduced and a desired waveform can be arbitrarily formed.

### Brief description of the drawings

Figure 1 is a cross-sectional view of a homopolar induction generator relating to the embodiment 1 and is taken on the line X-X.
Figure 2 is a sectional view of a homopolar induction generator relating to the embodiment 1 and is taken on the line Y-Y.
Figure 3 is a plan and side view of an armature used in the embodiment 1.
Figure 4 is a perspective illustration of a rotating magnetic pole used in the embodiment 1.
Figure 5 is a plan and side view of an armature used in the embodiment 2.
Figure 6 is a perspective illustration of a rotating magnetic pole used in the embodiment 2.
Figure 7 is a sectional view of a magnetic pole of a rotating magnetic pole used in the embodiment 3.
Figure 8 is a sectional view of a magnetic pole of a rotating magnetic pole used in the embodiment 4.
Figures 9 , 10, 11, 12, and 13 are explanatory views showing a process of generating electric power in the present invention.
Figure 14 is an explanatory view showing an outside feature of a magnet when a rectangular wave is produced.
Figure 15 is an explanatory view showing an outside feature of a magnet when a chopping sea is produced.
Figure 16 is an explanatory view showing an outside feature of a magnet when sine wave is produced.
Figures 17, 18, and 19 are explanatory views showing the current process of generating electric power.

### Description of the Preferred Embodiments

Hereinafter, the following explanations of the embodiments of the present invention are based on drawings.

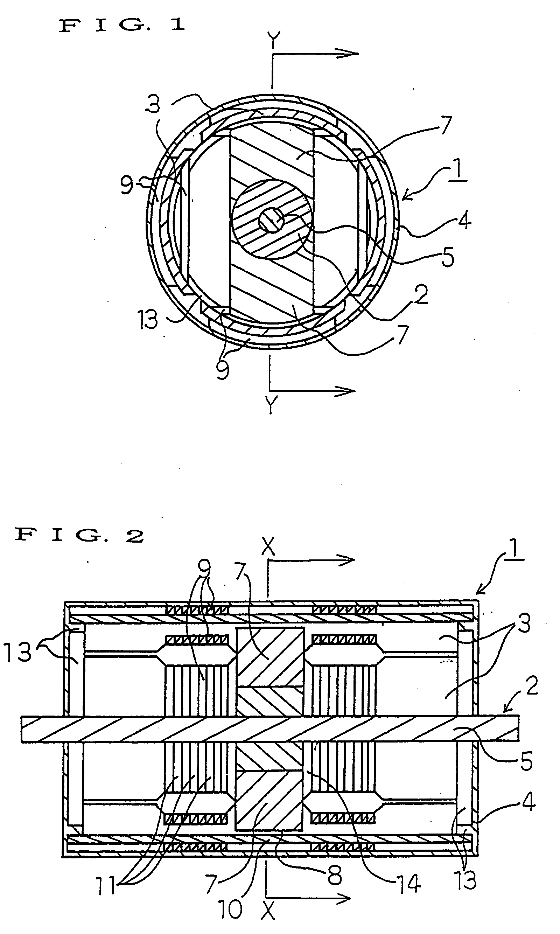

Figure 1 is a cross-sectional view of a homopolar induction generator relating to the embodiment 1 and is taken on the line X-X, and figure 2 is a sectional view of a homopolar induction generator relating to the embodiment 1 and is taken on the line Y-Y. 1 in drawings shows the present invention, a homopolar induction generator, 2 is a rotating magnetic pole of the said homopolar induction generator, 3 is an armature, and 4 is an outer case. 5 is a rotating shaft of the rotating magnetic pole, 6 is a magnetic pole section, 7 is a magnet, and 8 s a outer side of the said magnet 7. 9 is a coil section of the said armature 3, 10 is a magnetized section, 11 is a conductor, 12 is an armature core. 13 is a circular projection set in outer case 4. 14 is a magnetic room surrounded magnetized section 10.

A word "magnetize" in this specification is used in case that a material is magnetized and a word "demagnetize" is used in case that a magnetized material returns to the original condition.

A homopolar induction generator of the embodiment 1 comprises a rotating magnetic pole 2, 4 pieces of armatures 3, and an outer case 4. 4 pieces of the armatures 3 are positioned around the rotating magnetic pole 2 and the directions of the axial line of a coil section 9 of the armatures 3 and a rotating shaft 5 of the rotating magnetic pole 2 are same. A circular projection 13 is arranged in the outer case 4 and this circular projection 13 supports the armatures 3 so that a magnetized section 10 of the armature 3 never becomes close to an outer side 8 of a magnet 7.

In this embodiment, 4 pieces of the armature 3 is set, but the number can be arbitrarily increased if necessary.

In other words, when alternating currents of three phases are produced by using a rotating magnetic pole 2 in which N pieces of the magnet 7 are positioned on a magnetic pole section 6, 3nm pieces (m is a natural logarithm) of armatures 3 or 3P pieces (P is a natural logarithm except magnification of n) are arranged and electric power procured from the armature 3 is obtained by properly combining produced electric power. This homopolar induction generator can obtain an alternating current of an arbitrary phase in the aforementioned method.

The next explanation is about armatures 3 and a rotating magnetic pole 2 used in the embodiment 1.

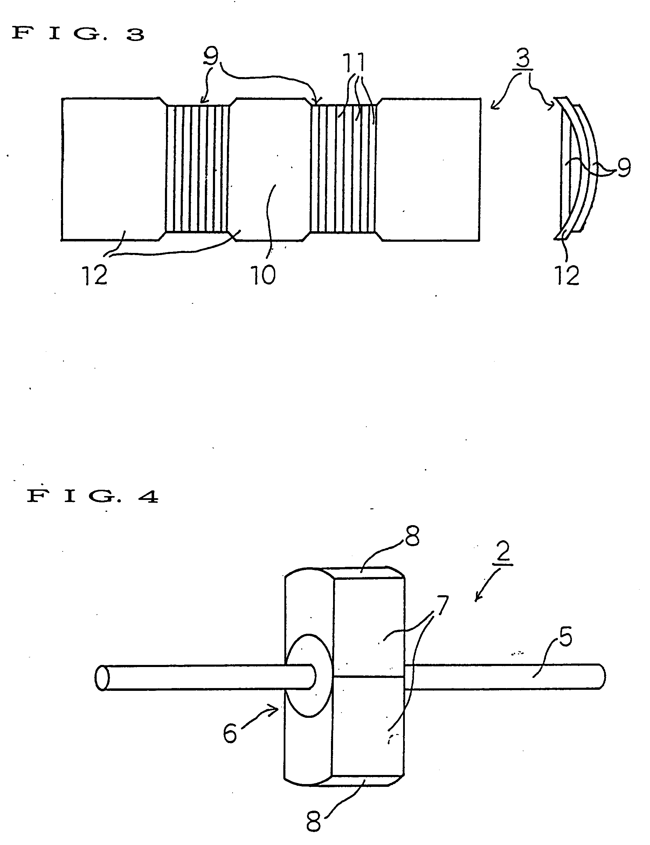

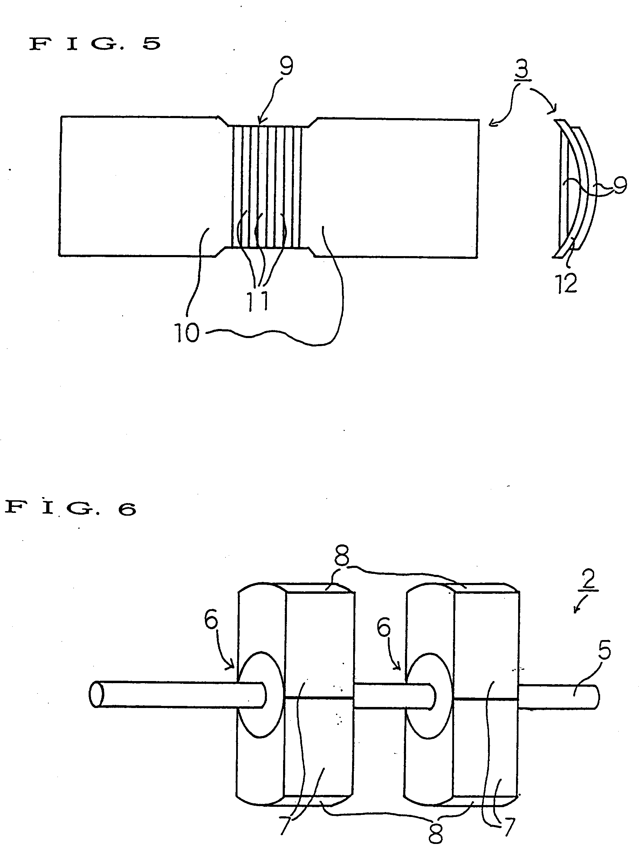

Figure 3 shows armature 3 used in this embodiment 1 and figure 4 is a rotating magnetic poles 2 used in the embodiment 1.

A magnetized section 10 is located in the nearly central part of an armature core 12 in an armature 3 shown in figure 3 and both sides of the magnetized section 10 are wound by conductors 11 so that a coil section 9 is formed.

Materials of the armature core 12 are not restricted unless they have a high magnetic permeability. Preferably they are ferromagnets such as ferro-alloy (KS steel) including cobalt, tungsten, chrome, and carbon, alloy (MS steel) containing iron, nickel, aluminum, and cobalt, alloy consisting of cobalt and samarium, and alloy comprising iron, neodymium, boron so that it is possible to efficiently generate electric power. A feature of the magnetized section 10 of the armature core 12 is a circular and magnetized room 14 is formed into like a cylinder by combining the inside of the magnetized section 10 when 4 pieces of the armature core 12 are arranged around a rotating magnetic pole 2.

A magnetic pole section 6 is arranged in the nearly middle of a rotating shaft 5 of a rotating magnetic pole 2 shown in figure 4. Two magnets 7 are arranged in the middle of the rotating shaft 5 so that N poles can be positioned on one out side end of each magnet 7. Moreover, outer side 8 of the magnet 7 is formed into a circular and a radius of this circular is slightly smaller than the one of magnetized section 10 of the said armature 3. In other words, when a magnetic pole section 6 rotates within magnetized room 14 of combined armatures 3, and the outer side 8 of the magnetic pole section 6 becomes close to the inside of magnetized room 14.

Features of an armature 3 and rotating magnetic poles are not restricted as aforementioned. For example, as figure 5 and figure 6 show, a coil section 9 is positioned in the middle of an armature core 12 and the magnetic parts are also arranged in both sides of the coils section 9 so that two parts of magnetized room 14 are arranged. Furthermore, two magnetic pole sections 6 are arranged on a rotating magnetic pole 2 so that each magnetic pole section 6 can separately rotate within each magnetized room 14.

When a plurality of magnetic pole sections are arranged, magnets 7 positioned on a magnetic pole section 6 can be arranged so that S poles of the magnets 7 can be positioned on one end side of a rotating shaft 5 and N poles of the magnets 7 can be positioned on the other end side of the rotating shaft 5.

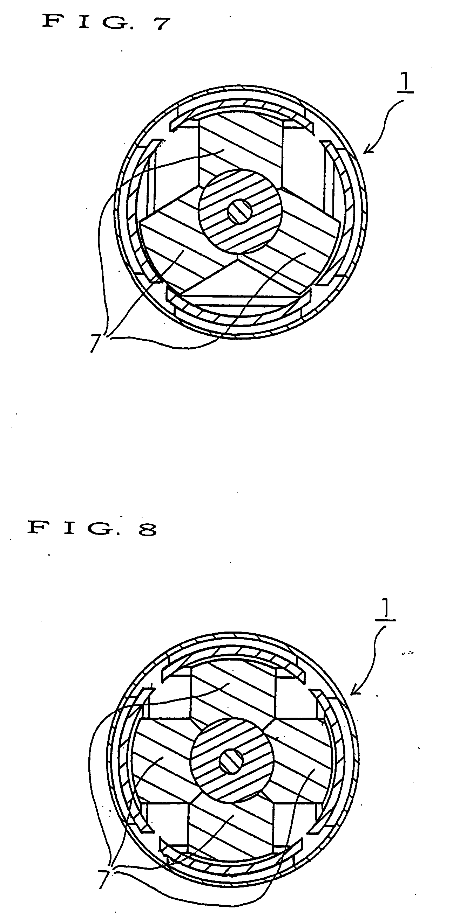

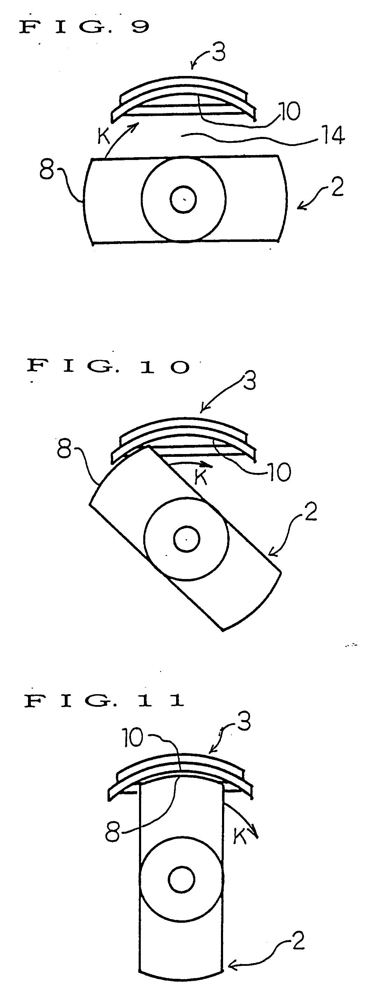

Moreover, as shown in figure 7 and figure 8, the case that three or four or more than four pieces of a magnet 7 are positioned on a magnetic pole section 6 is also included in the scope of the present invention. It is better that the number of armature 3 should be 3n pieces or 4n pieces (n is a natural logarithm) in order to obtain desired waveform when three or four magnets 7 are arranged in the magnetic pole section 6.

Hereinafter, a mechanism of generating under the present invention; a homopolar induction generator 1 is explained based on figure 9, 10 , 11, 12, and 13. An armature 3 is positioned on near rotating magnetic pole 2 in figure 9, 10, 11, 12, and 13, and the rotating magnetic pole 2 rotates in the direction indicated by arrow K.

A magnetized section 10 of an armature 3 does not become close to outer side 8 of a magnet 7 shown in figure 9. Therefore, the armature 3 is not effected by a rotating magnetic pole 2 and the armature 3 is not magnetized.

Figure 10 shows a rotating magnetic pole 2 revolved about 45° being compared with one shown in figure 9. In figure 10, as a magnetized section 10 becomes somewhat close to outer side 8 of a magnet 7, an armature 3 in the figure 10 is a little magnetized. Because the armature 3 becomes magnetized when the condition of the armature 3 in figure 9 changes to one in figure 10, electric power runs through a coil section 9 in this process.

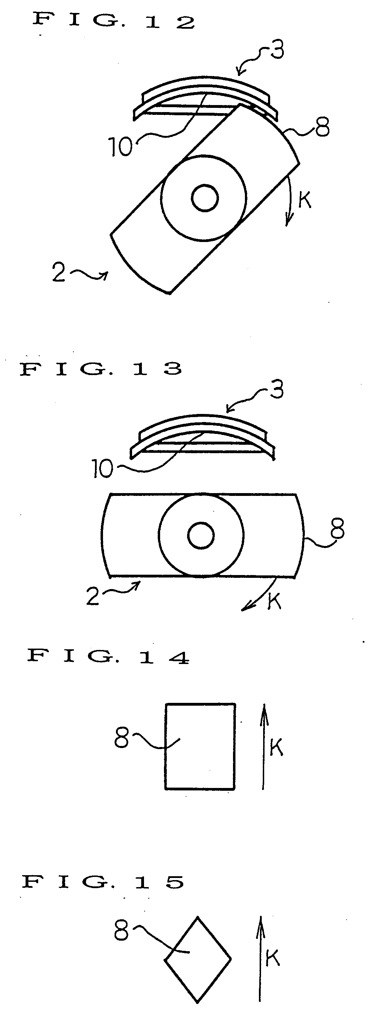

Figure 11 shows a rotating magnetic pole 2 revolved about 90° being compared with one shown in figure 9. An armature 3 is magnetized as magnetized section 10 becomes the closest to outer side 8 of a magnet 7. However, as the armature 3 has been magnetized in figure 10 when the condition of the armature 3 in figure 10 changes to one in figure 11, the armature 3 is slightly magnetized. Therefore, weak electric power runs through a coil section 9 in this process. No electric power runs through the coil section 9 as a magnetic flux of the armature 3 is saturated.

Figure 12 shows a rotating magnetic pole 2 revolved about 135 ° being compared with one shown in figure 9. In figure 12, armature 3 is somewhat magnetized as a magnetized section 10 becomes somewhat close to outer side 8. However, in figure 11, the armature 3 is slightly demagnetized as the armature 3 has been magnetized with nearly saturated when the condition of the armature 3 in figure 11 changes to one in figure 12. Therefore, in this process, electric power runs through a coil section 9 in the opposite direction of the electric power explained in figure 11. No electric power runs thorough the coil section 9 when a magnetic flux of the armature 3 is magnetized with saturated in figure 12.

Figure 13 shows a rotating magnetic pole 2 revolved about 180 ° being compared with one shown in figure 9. In figure 13, an armature 3 is not magnetized as outer side 8 of magnet 7 does not become close to a magnetized section 10. However, the armature 3 is demagnetized as the armature 3 has been magnetized in figure 12 when the condition of the armature 3 in figure 12 changes to one in figure 13. Therefore, in this process, electric power runs thorough a coil section 9 in the opposite direction of electric power explained in figure 10 and 11.

As aforementioned, the present invention produces an alternating current due to magnetic induction produced at coil section 9 of armature 3 when a rotating magnetic pole 2 is magnetized on the armature 3 by being rotated and demagnetized from the armature 3.

The process in which a desired waveform can be obtained under this homopolar induction generator 1 is explained as hereinafter.

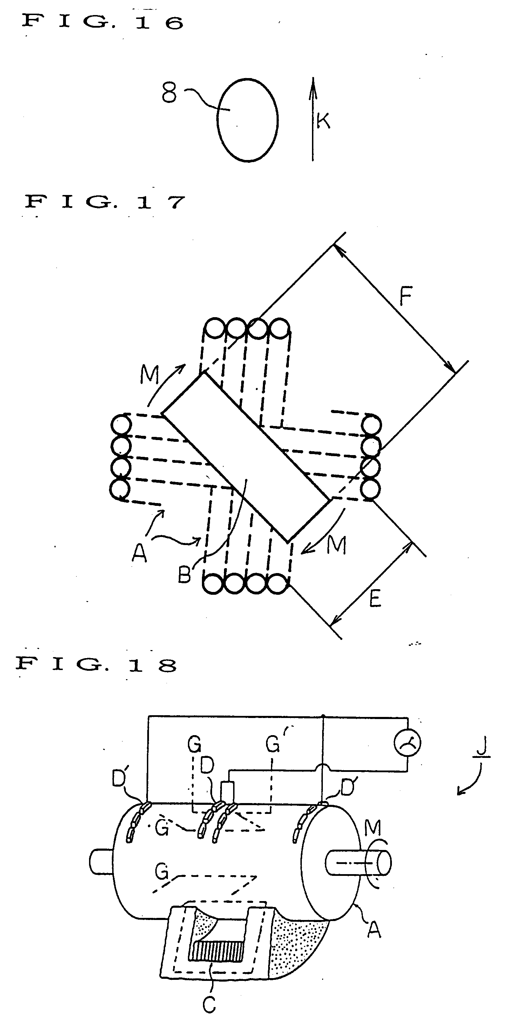

As this homopolar induction generator 1 generates in the aforementioned process, a desired rectangular wave, a chopping sea, and a sine wave can be obtained so that a feature of outer side 8 of a magnet 7 at a magnetic pole section 6 is properly formed. A rotating magnetic pole 2 is rotated with uniform velocity and a rectangular wave can be obtained when a feature of the outer side 8 of the magnet 7 is formed as shown in figure 14, a chopping sea can be obtained when a feature of the outer side 8 of the magnet 7 is formed as shown in figure 15, and a sine wave can be obtained when a feature of the outer side 8 of the magnet 7 is formed as shown in figure 16.

Moreover, in the present invention, a homopolar induction generator 1, high voltage can be obtained when a rotating magnetic pole 2 is rotated fast so that an armature 3 is quickly magnetized and then becomes demagnetized. Low voltage can be obtained when the rotating magnetic pole 2 is rotated slow so that the armature 3 is smoothly magnetized and then becomes demagnetized. Therefore, a desired waveform can be obtained by properly changing the rotating speed of the rotating magnetic pole 2.

Furthermore, a direct current without ripple can be obtained by rectifying a rectangular current of an alternating current of a single phase.

### Industrial applicability

Electric power can be efficiently provided from a rotation because a feature of a homopolar induction generator relating to the present invention is formed as aforementioned, in addition, waveform is not disturbed even when the size of a generator is reduced, and an alternating current can be stably supplied. Furthermore, the homopolar induction generator is applicable for air speedometer, a generator for a car and etc. as a small generator because a desired waveform can be arbitrarily formed.

## Claims

1. A homopolar induction generator (1) comprising a rotating magnetic pole (2) and a plurality of armatures (3) consisting of an armature core (12) an 5 d a conductor (11) and including a magnetized section (10) and a coil section (9) which is the conductor (11) wound around part of the said armature core (12);
the rotating magnetic pole (2) comprising a rotating shaft (5) and a magnet (7) and having a magnetic pole section (6) in which more than two magnets (7) are positioned around the part of the said rotating shaft (5), and
the magnets (7) arranged in the magnetic pole section (6) being arranged on the rotating shaft (5) so that the S pole or N pole of the magnet can be positioned on the opposite side of the rotating shaft (5), and
the said armature (3) being arranged so that the axial line of the coil section (9) of the armature (3) and the rotating shaft (5) of the rotating magnetic pole (2) are arranged in the same direction around the said rotating magnetic pole (2), and
the magnetized section (10) of the armature (3) repeatedly becoming close to and far from the magnetic pole section (6) when the rotating magnetic pole (2) rotates.

2. A homopolar induction generator (1) comprising a rotating magnetic pole (2) and a plurality of armatures (3) consisting of an armature core (12) and a conductor (11) and including a magnetized section (10) and a coil section (9) which is the conductor (11) wound around part of the said armature core (12);
the rotating magnetic pole (2) comprising a rotating shaft (5) and a magnet (7) and having a plurality of magnetic pole sections (6) in which more than two magnets (7) are arranged around the part of the said rotating shaft (5), and the magnets (7) arranged in the magnetic pole section (6) being arranged so that the S poles of the magnets can be positioned on one end side of th 5 e rotating shaft (5) and the N poles of the magnets can be positioned on the other end side, and
the said armature (3) being arranged so that the axial line of the coil section (9) of the armature (3) and the rotating shaft (5) of the rotating magnetic pole (2) are arranged in the same direction around the said rotating mag10 netic pole (2), and
the magnetized section (10) of the armature (3) repeatedly becoming close to and far from the magnetic pole section (6) when the rotating magnetic pole (2) rotates.
